# EUROPEAN PATENT APPLICATION

(11) **EP 4 618 492 A1**
(43) Date of publication of application: **17.09.2025**
(21) Application number: 23896779.8
(22) Date of filing: 28.11.2023
(51) Int. Cl.: H04L 41/04

(54) **INTENT MANAGEMENT METHOD, AND APPARATUS**

(30) Priority: 30.11.2022 CN 202211527911
(71) Applicant: Huawei Technologies Co., Ltd., Shenzhen, Guangdong 518129 (CN)
(72) Inventor: XIA, Haitao, Shenzhen, Guangdong 518129 (CN)
(74) Representative: Isarpatent
(86) International application number: PCT/CN2023/134705
(87) International publication number: WO 2024/114630

(57) **Abstract**

Embodiments of this application provide an intent management method and apparatus, to detail an implementation process of intent translation. **In** the method, an intent management entity receives an intent creation request message from an OSS/BSS, where the intent creation request message is used to request to create a first intent for a first management object (S401). The intent management entity translates the first intent based on first information, to obtain management operation information corresponding to the first intent, where the first information indicates a status of the first management object (S402); and the intent management entity sends the management operation information to a MANO entity (S406).

## Description

### CROSS-REFERENCE TO RELATED APPLICATIONS

This application claims priority to Chinese Patent Application No. 202211527911.0, filed with the China National Intellectual Property Administration on November 30, 2022 and entitled "INTENT MANAGEMENT METHOD AND APPARATUS", which is incorporated herein by reference in its entirety.

### TECHNICAL FIELD

This application relates to the field of communication technologies, and in particular, to an intent management method and apparatus.

### BACKGROUND

In telecommunications industry standards, an intent (intent) is a formal specification describing expectations (expectations), including requirements on a system, objectives, and definitions of constraints on a system. In short, the intent is to specify "what to do" rather than "how to do" for an objective. The introduction of the intent can simplify an interface interaction mode in a standard architecture of the telecom industry. An interface operation consumer (which may be understood as an intent requester) does not need to get caught up interface implementation details. Instead, the intent is transferred in an interface operation using high-level abstract objective descriptions. In addition, an interface operation provider (which may be understood as an intent executor) needs to be configured with a more intelligent brain to interpret, execute, and verify an intent implementation.

Intent management (intent management) is a hot topic in the evolution of telecom network operation management in an autonomous network (autonomous network, AN) direction in recent years. An important function of intent management is intent translation (intent translation), also referred to as intent interpretation (intent interpretation). To be specific, intent translation means to translate a to-be-implemented intent into a management operation that can be performed in a network functions virtualisation (network functions virtualisation, NFV) management domain. An input of intent translation is an intent, and an output of intent translation is a management operation. Currently, there is no related technical solution for how to implement intent translation.

### SUMMARY

Embodiments of this application provide an intent management method and apparatus, to detail an implementation process of intent translation.

According to a first aspect, an embodiment of this application provides an intent management method. The method may be performed by an intent management entity. Specifically, the intent management entity receives an intent creation request message from an operation support system/business support system (operation support system/business support system, OSS/BSS), where the intent creation request message is used to request to create a first intent for a first management object; translates a first intent based on first information, to obtain management operation information corresponding to the first intent, where the first information indicates a status of the first management object; and sends the management operation information to a management and orchestration (management and orchestration, MANO) entity.

In this embodiment of this application, the intent management entity may translate the first intent for the first management object based on the status of the first management object, to obtain the management operation information corresponding to the first intent. In comparison with a manner of directly translating the first intent, an implementation process of intent translation can be detailed, so that the intent translation can adapt to a status of a management object corresponding to the intent in an NFV MANO management domain.

In a possible implementation, for example, the first management object may be a network service (network service, NS), an NFV template, a virtualised network function (virtualised network function, VNF), a virtualised network function component (virtualised network function descriptor, VNFC), a managed container infrastructure object (managed container infrastructure object, MCIO), a virtual machine (virtual machine, VM), a bare metal (bare metal, BM) (also referred to as a bare machine), a container infrastructure service (container infrastructure service, CIS), a physical network function (physical network function, PNF), a virtual link (virtual link, VL), a connection point (connection point, CP), or a virtual connection point (virtual connection point, VCP). This is not limited in this embodiment of this application.

In a possible implementation, the management operation information indicates a first management operation. Before sending the management operation information to the MANO entity, the intent management entity may send a management operation request message to the MANO entity, where the management operation request message is used to request to determine whether the first management operation is allowed to be performed; and receive a management operation response message from the MANO entity, where the management operation response message indicates that the MANO entity is allowed to perform the first management operation.

In the foregoing manner, before sending the first management operation to the MANO entity, the intent management entity may first perform a feasibility check on the first management operation, that is, determine, before intent creation, whether each condition of the intent creation is met. This can implement a closed-loop control capability of the intent management entity on an intent translation logic, reduce a case of being returned because a condition is not met in an intent creation process, and improve a success rate of intent creation.

In a possible implementation, the first management operation may include but is not limited to one or more of the following: instantiating a network service, creating a container cluster, or reusing a created virtualised network function instance.

In a possible implementation, the method may further include: The intent management entity receives a first notification message from the MANO entity, where the first notification message includes change information of the status of the first management object; and modifies the status of the first management object based on the first notification message. For example, the intent management entity may locally modify the status of the first management object based on the change information of the status of the first management object.

In the foregoing manner, the intent management entity can update the status of the first management object that is maintained by the intent management entity in a timely manner, so that the status of the first management object that is locally maintained by the intent management entity can be consistent with a status of the first management object in the NFV MANO management domain. This can reduce a problem that an error exists in an intent translation result because a status of a management object that is locally maintained by the intent management entity is inconsistent with a status of the management object in the NFV MANO management domain, improving accuracy of the intent translation result.

In a possible implementation, the method may further include: The intent management entity subscribes to a notification of a status change of the first management object from the MANO entity.

In the foregoing manner, the intent management entity may subscribe to the notification of the status change of the management object from the MANO entity, so that the MANO entity sends the subscribed notification of the status change of the management object to the intent management entity in a timely manner. Certainly, the MANO entity may also actively push (push) the notification of the status change of the management object to the intent management entity. An implementation is flexible.

In a possible implementation, the first information may further indicate information about a second management object having a first relationship with the first management object.

In the foregoing manner, the intent management entity may translate the first intent for the first management object based on the status of the first management object and the information about the second management object having the first relationship with the first management object, so that an implementation process of intent translation can be detailed. In this way, the intent management entity can translate the intent with reference to the status of the management object corresponding to the intent in the NFV MANO management domain, and with reference to information about a management object associated with the management object in the NFV MANO management domain.

In a possible implementation, the information about the second management object indicates a status of the second management object, indicates information about a third management object having a second relationship with the second management object, or indicates the status of the second management object and the information about the third management object having the second relationship with the second management object.

In a possible implementation, the method may further include: The intent management entity receives a second notification message from the MANO entity, where the second notification message includes change information of a management object having the first relationship with the first management object; and modifies, based on the second notification message, information about the management object having the first relationship with the first management object. For example, the intent management entity may locally modify, based on the change information of the management object having the first relationship with the first management object, the information about the management object having the first relationship with the first management object.

In the foregoing manner, the intent management entity can update, in a timely manner, information about two management objects having the first relationship with each other that is maintained by the intent management entity, so that the information about the two management objects having the first relationship with each other that is locally maintained by the intent management entity can be consistent with information about the two management objects having the first relationship with each other in the NFV MANO management domain. This can reduce a problem that an error exists in an intent translation result because information about two management objects having the first relationship with each other that is locally maintained by the intent management entity is inconsistent with information about the two management objects having the first relationship with each other in the NFV MANO management domain, improving accuracy of the intent translation result.

In a possible implementation, the method may further include: The intent management entity subscribes, from the MANO entity, to a notification of a change of the management object having the first relationship with the first management object.

In the foregoing manner, the intent management entity may subscribe, from the MANO entity, to the notification of the change of the management object having the first relationship, so that the MANO entity sends, to the intent management entity in a timely manner, the subscribed notification of the change of the management object having the first relationship. Certainly, the MANO entity may also actively push, to the intent management entity, the notification of the change of the management object having the first relationship. An implementation is flexible.

In a possible implementation, the first relationship in this embodiment of this application may include but is not limited to one or more of the following relationships:
a running relationship, where the running relationship indicates that one of two management objects is a running environment of the other management object;
a service relationship, where the service relationship indicates that one of two management objects provides a service for the other management object;
a peer relationship, where the peer relationship indicates that two management objects run in a same cluster and work cooperatively;
a composition relationship, where the composition relationship indicates that one of two management objects consists of the other management object;
a deployment relationship, where the deployment relationship indicates that two management objects are deployed on a same resource or different resources, or indicates that the two management objects are deployed in a same area or different areas; or
an inheritance relationship, where the inheritance relationship indicates that one of two management objects inherits a function and/or an attribute of the other management object.

In the foregoing manner, there are a plurality of implementations of the first relationship, so that an intent translation result can better cover expectations of the intent. A combination manner of management objects having the first relationship with each other is flexible.

In a possible implementation, the status of the first management object in this embodiment of this application may include but is not limited to one or more of the following statuses:
a running status, where the running status indicates that the first management object has been instantiated or has not been instantiated;
a usage status, where the usage status indicates that a first resource corresponding to the first management object is completely occupied, partially occupied, or not occupied, and the first resource may include, for example, a computing resource (for example, a central process unit (central process unit, CPU) resource and/or a memory resource) and/or a storage resource (for example, an external memory); or
a loading status, where the loading status indicates that the first management object has been created, is being loaded, is being processed, or has been loaded.

In the foregoing manner, there are a plurality of implementations of the status of the management object, so that the intent management entity can determine, with reference to the status of the management object, feasibility of performing the first management operation on the first management object after intent translation.

In a possible implementation, the method may further include: The intent management entity sends an intent creation response message to the OSS/BSS, where the intent creation response message indicates that the first intent is successfully created.

In a possible implementation, the first intent in this embodiment of this application may be a network service intent. However, this embodiment of this application is not limited thereto.

According to a second aspect, an embodiment of this application provides an intent management method. The method may be performed by an intent management system, and the intent management system may include an intent management entity and an OSS/BSS. Specifically, the OSS/BSS sends an intent creation request message to the intent management entity, where the intent creation request message is used to request to create a first intent for a first management object. The intent management entity receives the intent creation request message from the OSS/BSS, translates the first intent based on first information, to obtain management operation information corresponding to the first intent, and sends the management operation information to a management and orchestration MANO entity, where the first information indicates a status of the first management object.

In a possible implementation, for example, the first management object may be an NS, an NFV template, a VNF, a virtualised network function component, a container infrastructure object, a virtual machine, a bare metal, a container infrastructure service, a physical network function, a virtual link, a connection point, or a virtual connection point. This is not limited in this embodiment of this application.

In a possible implementation, the intent management system may further include the MANO entity. The method may further include: The MANO entity receives the management operation information from the intent management entity, and performs a management operation indicated by the management operation information.

In a possible implementation, the management operation information indicates a first management operation. Before sending the management operation information to the MANO entity, the intent management entity may send a management operation request message to the MANO entity, where the management operation request message is used to request to determine whether the first management operation is allowed to be performed; and receive a management operation response message from the MANO entity, where the management operation response message indicates that the MANO entity is allowed to perform the first management operation.

In a possible implementation, the first management operation may include but is not limited to one or more of the following: instantiating a network service, creating a container cluster, or reusing a created virtualised network function instance.

In a possible implementation, the intent management system may further include the MANO entity. The method may further include: The MANO entity sends a first notification message to the intent management entity, where the first notification message includes change information of the status of the first management object. The intent management entity receives the first notification message from the MANO entity, and modifies the status of the first management object based on the first notification message. For example, the intent management entity may locally modify the status of the first management object based on the change information of the status of the first management object.

In a possible implementation, the method may further include: The intent management entity subscribes to a notification of a status change of the first management object from the MANO entity. The MANO entity receives, from the intent management entity, information that is used to subscribe to the notification of the status change of the first management object.

In a possible implementation, the first information may further indicate information about a second management object having a first relationship with the first management object.

In a possible implementation, the information about the second management object indicates a status of the second management object, indicates information about a third management object having a second relationship with the second management object, or indicates the status of the second management object and the information about the third management object having the second relationship with the second management object.

In a possible implementation, the intent management system may further include the MANO entity. The method may further include: The MANO entity sends a second notification message to the intent management entity, where the second notification message includes change information of a management object having the first relationship with the first management object. The intent management entity receives the second notification message from the MANO entity, and modifies, based on the second notification message, information about the management object having the first relationship with the first management object. For example, the intent management entity may locally modify, based on the change information of the management object having the first relationship with the first management object, the information about the management object having the first relationship with the first management object.

In a possible implementation, the method may further include: The intent management entity subscribes, from the MANO entity, to a notification of a change of the management object having the first relationship with the first management object. The MANO entity receives, from the intent management entity, information that is used to subscribe to the notification of the change of the management object having the first relationship with the first management object.

In a possible implementation, the first relationship in this embodiment of this application may include but is not limited to one or more of the following relationships:
a running relationship, where the running relationship indicates that one of two management objects is a running environment of the other management object;
a service relationship, where the service relationship indicates that one of two management objects provides a service for the other management object;
a peer relationship, where the peer relationship indicates that two management objects run in a same cluster and work cooperatively;
a composition relationship, where the composition relationship indicates that one of two management objects consists of the other management object;
a deployment relationship, where the deployment relationship indicates that two management objects are deployed on a same resource or different resources, or indicates that the two management objects are deployed in a same area or different areas; or
an inheritance relationship, where the inheritance relationship indicates that one of two management objects inherits a function and/or an attribute of the other management object.

In a possible implementation, the status of the first management object in this embodiment of this application may include but is not limited to one or more of the following statuses:
a running status, where the running status indicates that the first management object has been instantiated or has not been instantiated;
a usage status, where the usage status indicates that a first resource corresponding to the first management object is completely occupied, partially occupied, or not occupied, and the first resource may include, for example, a computing resource (for example, a CPU resource and/or a memory resource) and/or a storage resource (for example, an external memory); or
a loading status, where the loading status indicates that the first management object has been created, is being loaded, is being processed, or has been loaded.

In a possible implementation, the method may further include: The intent management entity sends an intent creation response message to the OSS/BSS, where the intent creation response message indicates that the first intent is successfully created. The OSS/BSS receives the intent creation response message from the intent management entity.

In a possible implementation, the first intent in this embodiment of this application may be a network service intent. However, this embodiment of this application is not limited thereto.

According to a third aspect, an embodiment of this application provides an intent management apparatus. The intent management apparatus is configured to perform the method according to the first aspect and any one of the possible implementations of the first aspect. In a possible implementation, the intent management apparatus includes a baseband apparatus and a radio frequency apparatus.

In another possible implementation, the intent management apparatus includes a processing unit (sometimes also referred to as a processing module) and a transceiver unit (sometimes also referred to as a transceiver module). The transceiver unit can implement a sending function and a receiving function. When the transceiver unit implements the sending function, the transceiver unit may be referred to as a sending unit (sometimes also referred to as a sending module). When the transceiver unit implements the receiving function, the transceiver unit may be referred to as a receiving unit (sometimes also referred to as a receiving module). The sending unit and the receiving unit may be a same functional unit, the functional unit is referred to as a transceiver unit, and the functional unit can implement the sending function and the receiving function. Alternatively, the sending unit and the receiving unit may be different functional units, and the transceiver unit is a general term for these functional units.

For example, the transceiver unit is configured to receive an intent creation request message from an OSS/BSS, where the intent creation request message is used to request to create a first intent for a first management object. The processing unit is configured to translate the first intent based on first information, to obtain management operation information corresponding to the first intent, where the first information indicates a status of the first management object. The transceiver unit is further configured to send the management operation information to a management and orchestration MANO entity.

In a possible implementation, for example, the first management object may be an NS, an NFV template, a VNF, a virtualised network function component, a container infrastructure object, a virtual machine, a bare metal, a container infrastructure service, a physical network function, a virtual link, a connection point, or a virtual connection point. This is not limited in this embodiment of this application.

In a possible implementation, the management operation information indicates a first management operation. Before sending the management operation information to the MANO entity, the transceiver unit is further configured to: send a management operation request message to the MANO entity, where the management operation request message is used to request to determine whether the first management operation is allowed to be performed; and receive a management operation response message from the MANO entity, where the management operation response message indicates that the MANO entity is allowed to perform the first management operation.

In a possible implementation, the first management operation may include but is not limited to one or more of the following: instantiating a network service, creating a container cluster, or reusing a created virtualised network function instance.

In a possible implementation, the transceiver unit is further configured to receive a first notification message from the MANO entity, where the first notification message includes change information of the status of the first management object. The processing unit is further configured to modify the status of the first management object based on the first notification message. For example, the processing unit is configured to locally modify the status of the first management object based on the change information of the status of the first management object.

In a possible implementation, the transceiver unit is further configured to subscribe to a notification of a status change of the first management object from the MANO entity.

In a possible implementation, the first information may further indicate information about a second management object having a first relationship with the first management object.

In a possible implementation, the information about the second management object indicates a status of the second management object, indicates information about a third management object having a second relationship with the second management object, or indicates the status of the second management object and the information about the third management object having the second relationship with the second management object.

In a possible implementation, the transceiver unit is further configured to receive a second notification message from the MANO entity, where the second notification message includes change information of a management object having the first relationship with the first management object. The processing unit is further configured to modify, based on the second notification message, information about the management object having the first relationship with the first management object. For example, the processing unit is configured to locally modify, based on the change information of the management object having the first relationship with the first management object, the information about the management object having the first relationship with the first management object.

In a possible implementation, the transceiver unit is further configured to subscribe, from the MANO entity, to a notification of a change of the management object having the first relationship with the first management object.

In a possible implementation, the first relationship in this embodiment of this application may include but is not limited to one or more of the following relationships:
a running relationship, where the running relationship indicates that one of two management objects is a running environment of the other management object;
a service relationship, where the service relationship indicates that one of two management objects provides a service for the other management object;
a peer relationship, where the peer relationship indicates that two management objects run in a same cluster and work cooperatively;
a composition relationship, where the composition relationship indicates that one of two management objects consists of the other management object;
a deployment relationship, where the deployment relationship indicates that two management objects are deployed on a same resource or different resources, or indicates that the two management objects are deployed in a same area or different areas; or
an inheritance relationship, where the inheritance relationship indicates that one of two management objects inherits a function and/or an attribute of the other management object.

In a possible implementation, the status of the first management object in this embodiment of this application may include but is not limited to one or more of the following statuses:
a running status, where the running status indicates that the first management object has been instantiated or has not been instantiated;
a usage status, where the usage status indicates that a first resource corresponding to the first management object is completely occupied, partially occupied, or not occupied, and the first resource may include, for example, a computing resource (for example, a CPU resource and/or a memory resource) and/or a storage resource (for example, an external memory); or
a loading status, where the loading status indicates that the first management object has been created, is being loaded, is being processed, or has been loaded.

In a possible implementation, the transceiver unit is further configured to send an intent creation response message to the OSS/BSS, where the intent creation response message indicates that the first intent is successfully created.

In a possible implementation, the first intent in this embodiment of this application may be a network service intent. However, this embodiment of this application is not limited thereto.

According to a fourth aspect, an embodiment of this application provides a communication apparatus. The communication apparatus may include one or more processors. Optionally, the communication apparatus may further include a memory. The memory is configured to store one or more computer programs or instructions. The one or more processors are configured to execute the one or more computer programs or instructions stored in the memory, so that the communication apparatus performs the method according to the first aspect and any one of the possible implementations of the first aspect.

According to a fifth aspect, an embodiment of this application further provides a computer-readable storage medium. The computer-readable storage medium stores computer-executable instructions. When the computer-executable instructions are invoked by a computer, the method according to the first aspect and any one of the possible implementations of the first aspect is performed.

According to a sixth aspect, an embodiment of this application further provides a chip. The chip is coupled to a memory, and is configured to read and execute program instructions stored in the memory, to implement the method according to the first aspect and any one of the possible implementations of the first aspect.

According to a seventh aspect, an embodiment of this application further provides an intent management system. The intent management system includes the intent management entity in the first aspect and any one of the possible implementations of the first aspect, and the OSS/BSS in the first aspect and any one of the possible implementations of the first aspect. Optionally, the intent management system may further include the MANO entity in the first aspect and any one of the possible implementations of the first aspect.

According to an eighth aspect, an embodiment of this application further provides a computer program product. The computer program product includes instructions. When the instructions are run on a computer, the computer is enabled to perform the method according to the first aspect and any one of the possible implementations of the first aspect.

For each of the second aspect to the eighth aspect and technical effects that may be achieved in each of the second aspect to the eighth aspect, refer to descriptions of the technical effects that may be achieved in the first aspect or possible solutions in the first aspect. Details are not described herein again.

### BRIEF DESCRIPTION OF DRAWINGS

FIG. 1 is a diagram of an NFV architecture to which an embodiment of this application is applicable;
FIG. 2 is a diagram of an intent management reference architecture to which an embodiment of this application is applicable;
FIG. 3 is a schematic flowchart of intent creation according to an embodiment of this application;
FIG. 4 is a schematic flowchart of an intent management method according to an embodiment of this application;
FIG. 5 is a schematic flowchart of another intent management method according to an embodiment of this application;
FIG. 6 is a schematic flowchart of still another intent management method according to an embodiment of this application;
FIG. 7 is a diagram of a structure of an intent management apparatus according to an embodiment of this application; and
FIG. 8 is a diagram of a structure of a communication apparatus according to an embodiment of this application.

### DESCRIPTION OF EMBODIMENTS

The following further describes this application in detail with reference to accompanying drawings.

In embodiments of this application, "a plurality of" means two or more. In view of this, in embodiments of this application, "a plurality of" may also be understood as "at least two". "At least one" may be understood as one or more, for example, one, two, or more. For example, "include at least one" means "include one, two, or more", and there is no limitation on which is included. For example, "include at least one of A, B, and C" may mean "include A, B, or C", "include A and B, A and C, or B and C", or "include A, B, and C". The term "and/or" describes an association relationship for describing associated objects and represents that three relationships may exist. For example, A and/or B may represent the following three cases: Only A exists, both A and B exist, and only B exists. In addition, the character "/", unless otherwise specified, generally represents an "or" relationship between the associated objects. The terms "entity" and "component" may be used interchangeably in embodiments of this application. The terms "according to" and "based on" may be used interchangeably in embodiments of this application.

Unless otherwise specified, ordinal numbers such as "first" and "second" in embodiments of this application are used to distinguish between a plurality of objects, and are not intended to limit a sequence, a time sequence, priorities, or importance of the plurality of objects. For example, a first notification message and a second notification message in embodiments of this application are used to distinguish between the two notification messages, and do not limit priorities, importance, or the like of the two notification messages. For another example, a first management object, a second management object, a third management object, and a fourth management object in embodiments of this application are used to distinguish between the four management objects, and do not limit priorities, importance, or the like of the four management objects.

The management object in embodiments of this application may be understood as a managed object (managed object) in an NFV MANO management domain. Correspondingly, the management object in embodiments of this application may be replaced with a managed object, or may be replaced with an object that is managed.

In addition, in embodiments of this application, the term "example" is used to represent giving an example, an illustration, or a description. Any embodiment or design scheme described as an "example" in this application should not be explained as being more preferred or having more advantages than another embodiment or design scheme. Exactly, the term "example" is used to present a concept in a specific manner.

Embodiments of this application provide an intent management method and apparatus, to detail an implementation process of intent translation, and improve efficiency of intent translation. The method and the apparatus in embodiments of this application are based on a same technical concept. Because problem-resolving principles of the method and the apparatus are similar, mutual reference may be made to implementations of the apparatus and the method, and repeated descriptions are not described.

To describe the technical solutions in embodiments of this application more clearly, the following describes the intent management method and apparatus provided in embodiments of this application in detail with reference to the accompanying drawings.

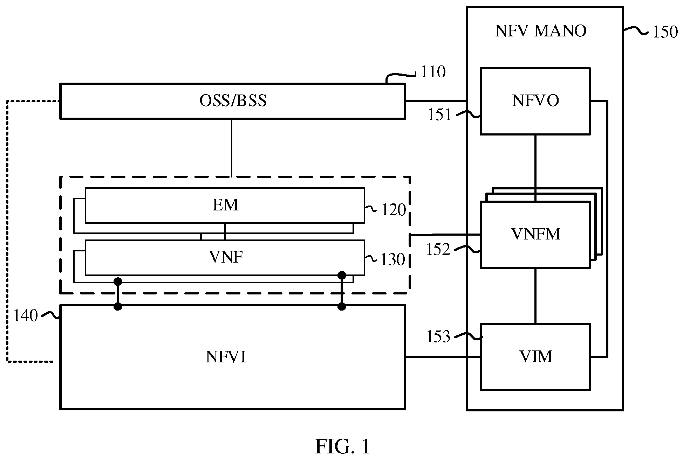

NFV means that a telecommunication network operator performs, by referring to a virtualisation technology in an information technology (information technology, IT) field, software and hardware decoupling on implementations of some telecommunication network functions (for example, a core network function) of a common server, switch, and memory, to implement rapid and efficient deployment and operation of a network service (network service, NS), and reduce capital expenditure and operating costs of a network. Standardization of the NFV mainly focuses on dynamic management and orchestration (management and orchestration, MANO) of a network service, a virtualised network function (virtualised network function, VNF), and a virtual resource. For an architecture of an NFV system in embodiments of this application, refer to FIG. 1 for understanding.

FIG. 1 is a diagram of an architecture of an NFV system. The NFV system may be used to implement a plurality of types of communication networks, for example, a local area network (local area network, LAN), an internet protocol (internet protocol, IP) network, or an evolved packet core (evolved packet core, EPC) network.

As shown in FIG. 1, the NFV system may include one or more operation support systems/business support systems (operation support systems/business support systems, OSSs/BSSs) 110 (one OSS/BSS is used as an example in FIG. 1), a plurality of network element managers (element managers, EMs) 120, a plurality of VNFs 130, an NFV infrastructure (NFV infrastructure, NFVI) 140, and an NFV MANO 150.

The following briefly describes entities in the NFV system.

(1) The OSS/BSS 110 is mainly oriented to a telecommunications service operator, and provides comprehensive network management and service operation functions, including network management (for example, fault monitoring and network information collection), charging management, customer service management, and the like.

(2) The EM 120 is configured to perform conventional fault, configuration, user, performance, and security management functions for the VNF 130.

(3) The VNF 130 corresponds to a physical network function (physical network function, PNF) in a conventional non-virtualised network, for example, a virtualised packet core (evolved packet core, EPC) node, a serving gateway (serving gateway, SGW), or a public data network gateway (public data network gateway, PGW).

The VNF 130 may consist of one or more VNF components (VNF components, VNFCs) of a lower function level. Therefore, one VNF may be deployed on a plurality of virtual machines (virtual machines, VMs), or may be deployed on one VM.

(4) The NFVI 140 is configured to provide various resources. The NFVI 140 may include, for example, a virtual resource layer, a virtualisation layer, and a hardware (hardware) resource layer.

(5) The NFV MANO 150 may include an NFV orchestrator (NFV orchestrator, NFVO) 151, one or more VNF managers (VNF managers, VNFMs) 152, and a virtualised infrastructure manager (virtualised infrastructure manager, VIM) 153.

The NFVO 151 may be configured to: manage and process a network service descriptor (network service descriptor, NSD) and a virtualised network function forwarding graph (VNF forwarding graph, VNFFG), manage a network service lifecycle, cooperate with the VNFM to implement VNF lifecycle management and a global view function of a virtual resource, and the like.

The VNFM 152 may implement the VNF lifecycle management, including virtualised network function descriptor (VNF descriptor, VNFD) management, VNF instantiation, VNF instance auto scaling (including scaling out/up (scaling out/up) and scaling in/down (scaling in/down)), VNF instance healing (healing), VNF instance termination, and the like.

The VIM 153 is mainly responsible for managing (including reserving and allocating) hardware resources and virtualised resources at an infrastructure layer, monitoring statuses of the virtualised resources and reporting faults, providing a virtualised resource pool for upper-layer applications, and the like.

In this embodiment of this application, functions of the NFV MANO 150 may be considered as a whole. The NFV MANO 150 as a whole may also be referred to as an NFV MANO autonomous domain, or referred to as an NFV MANO management domain, or referred to as an NFV autonomous domain, or referred to as an NFV management domain, or the like. A MANO entity in embodiments of this application may be understood as a functional entity in the NFV MANO 150, for example, the NFVO 151, the VNFM 152, or the VIM 153. In addition, the MANO entity in embodiments of this application may be replaced with a MANO component.

It should be understood that FIG. 1 is used as a reference architecture of the NFV system, and does not limit the architecture of the NFV system. For example, the NFV MANO 150 may further include container infrastructure service management (container infrastructure service management, CISM), container cluster management (container cluster management, CCM), and the like (not shown in FIG. 1).

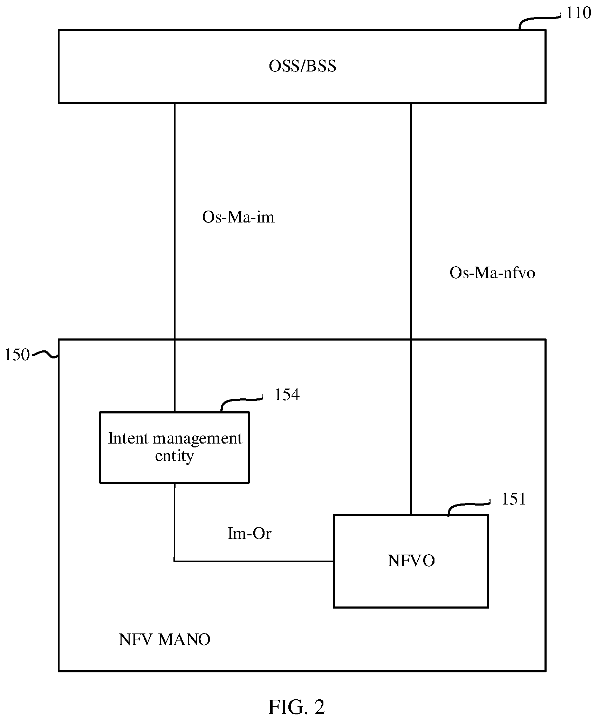

An NFV industry standards group under European Telecommunications Standards Institute has studied intent management (intent management) cases in an NFV MANO management domain and determined a definition of an NFV MANO northbound intent management interface, to simplify network service management interaction between an OSS/BSS and an NFV MANO, as shown in FIG. 2.

FIG. 2 is a diagram of an intent management reference architecture in an NFV MANO management domain. As shown in FIG. 2, an intent management entity 154 is deployed in the NFV MANO management domain. The intent management entity 154 may communicate with an OSS/BSS 110 through an Os-Ma-im interface. The intent management entity 154 may communicate with an NFVO 151 through an Im-Or interface. The OSS/BSS 110 interacts with the NFVO 151 through an Os-Ma-nfvo interface. In another possible implementation, the intent management entity 154 may alternatively not be deployed in the NFV MANO management domain. For ease of understanding of this embodiment of this application, an example in which the intent management entity 154 is deployed in the NFV MANO management domain is used for description in the following. For the OSS/BSS 110 and the NFVO 151, refer to related descriptions in FIG. 1. Details are not described herein again.

The intent management entity 154 may also be referred to as an intent management component, and may implement the following operations: intent creation, intent deletion, intent query, subscription and notification related to intent implementation, intent implementation reporting, and the like.

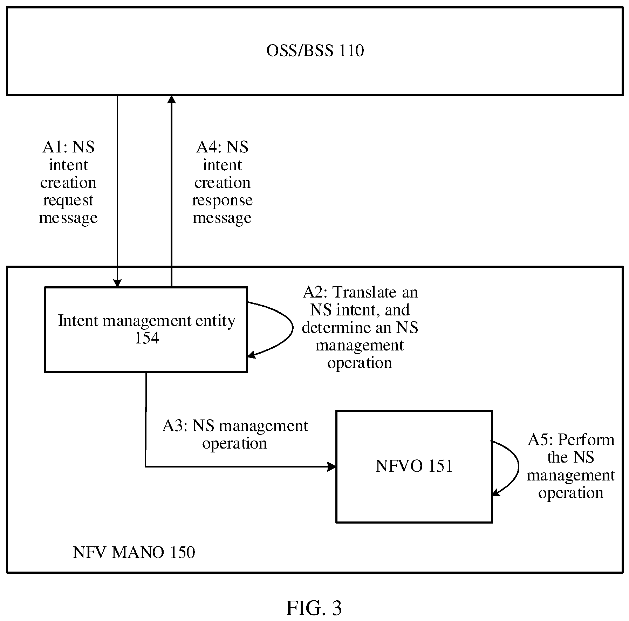

FIG. 3 is a schematic flowchart of intent creation by using an NS intent as an example. As shown in FIG. 3, the intent creation may include the following steps.

A1: An OSS/BSS 110 sends an NS intent creation request message to an intent management entity 154, where the NS intent creation request message is used to request to create an NS intent.

A2: After receiving the NS intent creation request message from the OSS/BSS 110, the intent management entity 154 parses the NS intent, translates the NS intent into an NS management operation that can be performed by an NFVO 151, and determines the NS management operation.

A3: The intent management entity 154 sends the NS management operation to the NFVO 151.

A4: The intent management entity 154 sends an NS intent creation response (response) message to the OSS/BSS 110. The NS intent creation response message may indicate that the NS intent is successfully created or indicate that the NS intent fails to be created.

A5: The NFVO 151 performs the NS management operation. Then, the intent management entity 154 may further verify whether the NS intent is implemented, and send a verification result to the OSS/BSS 110. The verification result is that the NS intent is implemented or that the NS intent is not implemented.

In the process shown in FIG. 3, only an input (that is, an input is an intent) and an output (that is, an output is a management operation) of intent translation are defined, and an implementation process of intent translation is not defined. That is, an implementation process of step A2 in FIG. 3 is equivalent to a black box. There is no related technical solution for how to specifically implement intent translation. In view of this, embodiments of this application provide an intent management method and apparatus, to detail an implementation process of intent translation, so that efficiency of intent translation can be improved.

The intent management method provided in embodiments of this application may be applied to the architecture shown in FIG. 2. The OSS/BSS in embodiments of this application may be the OSS/BSS 110 in FIG. 1 or FIG. 2. The intent management entity in embodiments of this application may be the intent management entity 154 in FIG. 2. The MANO entity in embodiments of this application may be the NFVO 151 in FIG. 1 or FIG. 2, the VNFM 152 in FIG. 1, the VIM 153 in FIG. 1, the CISM, or the CCM. However, this is not limited in embodiments of this application.

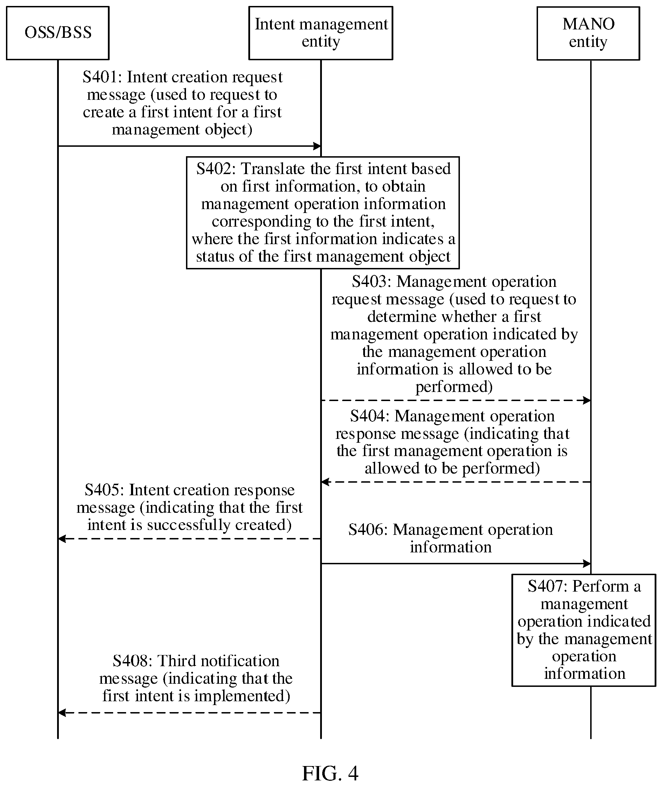

FIG. 4 is a schematic flowchart of an intent management method according to an embodiment of this application. As shown in FIG. 4, the method may include the following steps.

S401: An OSS/BSS sends an intent creation request message to an intent management entity. Correspondingly, the intent management entity receives the intent creation request message from the OSS/BSS.

The intent creation request message is used to request to create a first intent, or is used to request to create a first intent of an intent object. For example, the OSS/BSS may send, to the intent management entity based on a service requirement, an external input, or the like, the intent creation request message used to request to create the first intent. It should be understood that the intent creation request message sent by the OSS/BSS to the intent management entity may be used to request to create one or more intents. For ease of understanding, an example in which the intent creation request message is used to request to create one intent (that is, the first intent) is used in this embodiment of this application.

The intent creation request message may include information about the intent object and the first intent. The information about the intent object may include information such as an identifier and a type of the intent object.

Optionally, the intent object may be an NS, that is, the first intent may be an NS intent, for example, deploying an NS function that meets a specific performance requirement and/or a specific reliability requirement. However, this is not limited in this embodiment of this application. For example, the first intent may alternatively be creating a container cluster based on a specified container cluster description template.

The first intent may consist of the following information: a management object corresponding to the first intent and action information corresponding to the management object corresponding to the first intent; or a management object corresponding to the first intent and a target that needs to be achieved by the management object corresponding to the first intent.

The management object corresponding to the first intent may be understood as an entity and/or a resource in an NFV MANO management domain. For example, the management object corresponding to the first intent may include but is not limited to one or more of the following: an NS, an NFV template, a VNF, a virtualised network function component, a container infrastructure object, a virtual machine, a bare metal, a container infrastructure service, a physical network function, a virtual link, a connection point, or a virtual connection point. The NFV template is a description file that defines related information required for deployment and running of a management object in the NFV MANO management domain. For example, the NFV template may include but is not limited to one or more of the following: a network service descriptor (network service descriptor, NSD), a virtualised network function descriptor (VNF descriptor, VNFD), a VNF package, or an MCIO template.

It should be understood that there may be one or more management objects corresponding to the first intent. For ease of understanding of this embodiment of this application, the following uses an example in which the first intent corresponds to one management object for description, and the management object may be denoted as a first management object. Correspondingly, that the intent creation request message in S401 is used to request to create the first intent may be understood as that the intent creation request is used to request to create the first intent for the first management object. The action information corresponding to the management object corresponding to the first intent may be denoted as action information corresponding to the first management object. The target that needs to be achieved by the management object corresponding to the first intent may be denoted as a target that needs to be achieved by the first management object.

The action information corresponding to the first management object may indicate an action that needs to be performed to implement (or create) the first intent. For example, the first intent is to deploy an NS function that meets a specific performance requirement and/or a specific reliability requirement, and the action information corresponding to the first management object may indicate deployment. For another example, the first intent is to create a VNF instance, and the action information corresponding to the first management object may indicate creation.

The target that needs to be achieved by the first management object may be understood as a final status achieved by the first management object after the first intent is implemented (or created). For example, the first intent is to deploy an NS function that meets a specific performance requirement and/or a specific reliability requirement, the first management object corresponding to the first intent is an NS, and the target that needs to be achieved by the first management object is an NS that meets the specific performance requirement and/or the specific reliability requirement. For another example, the first intent is to create a VNF instance, the first management object corresponding to the first intent is a VNF, and the target that needs to be achieved by the first management object is VNF instantiation.

S402: The intent management entity translates the first intent based on first information, to obtain management operation information corresponding to the first intent.

The first information indicates a status of the first management object. For example, after receiving the intent creation request message, the intent management entity parses the first intent, determines the first management object, and translates the first intent based on the status of the first management object, to obtain the management operation information corresponding to the first intent. For example, the intent management entity may maintain (or store) a correspondence between a management object and a status of the management object. Further, the intent management entity may obtain the status of the first management object based on the first management object and the correspondence between the management object and the status of the management object.

In an example, the intent management entity may translate the first intent in the following manner: The intent management entity may translate the first intent based on the first management object, the status of the first management object, and the action information corresponding to the first management object, to obtain the management operation information corresponding to the first intent. Alternatively, the intent management entity may translate the first intent based on the first management object, the status of the first management object, and the target that needs to be achieved by the first management object, to obtain the management operation information corresponding to the first intent. Optionally, the intent management entity may alternatively translate the first intent based on the foregoing information and an intent translation model (or referred to as an intent translation template, or referred to as an intent translation rule). It should be understood that a specific implementation of the intent translation model is not limited in this embodiment of this application. For example, the intent translation model may include a mapping relationship between an intent and one or more pieces of management operation information.

The status of the first management object may include but is not limited to one or more of the following statuses.

Running status: The running status indicates that the first management object has been instantiated, or indicates that the first management object has not been instantiated. For example, the first management object is an NS, and the status of the first management object may be that the NS has been instantiated, or that the NS has not been instantiated. For another example, the first management object is a VNF, and the status of the first management object may indicate that the VNF has been instantiated, or indicate that the VNF has not been instantiated;

Usage status: The usage status may indicate that a first resource corresponding to the first management object is completely occupied, indicate that the first resource corresponding to the first management object is partially occupied, or indicate that the first resource corresponding to the first management object is not occupied. The first resource may include a computing resource, for example, a CPU resource and/or a memory resource; include a storage resource, for example, an external memory; or include a computing resource and a storage resource. For example, the first management object is a virtual machine, and the status of the first management object may indicate that a storage resource corresponding to the virtual machine is completely occupied, indicate that the storage resource corresponding to the virtual machine is partially occupied, or indicate that the storage resource corresponding to the virtual machine is not occupied. For another example, the first management object is a bare metal, and the status of the first management object may indicate that a computing resource corresponding to the bare metal is completely occupied, indicate that the computing resource corresponding to the bare metal is partially occupied, or indicate that the computing resource corresponding to the bare metal is not occupied. Optionally, when the usage status indicates that the computing resource (or the storage resource) corresponding to the first management object is partially occupied, the usage status may further indicate a proportion of an occupied computing resource (or storage resource) corresponding to the first management object (for example, indicate that 30% of the computing resource (or the storage resource) of the virtual machine has been occupied) or a proportion of an unoccupied computing resource (or storage resource) corresponding to the first management object (for example, indicate that 70% of the computing resource (or the storage resource) of the virtual machine remains); or

Loading status: The loading status may indicate that the first management object has been created, indicate that the first management object is being loaded, indicate that the first management object is being processed, or indicate that the first management object has been loaded. For example, the first management object is an NFV template, and the status of the first management object may indicate that the NFV template has been created, indicate that the NFV template is being loaded, indicate that the NFV template is being processed, or indicate that the NFV template has been loaded.

The management operation information may indicate one or more management operations that can be performed in the NFV MANO management domain. The management operation may be understood as a management operation that needs to be performed in the NFV MANO management domain to implement (or create) the first intent. The management operation may include but is not limited to one or more of the following: instantiating an NS, creating a container cluster, reusing a created VNF instance, or the like.

In a possible implementation, the first information may further indicate information about a second management object having an association relationship with the first management object. For example, the intent management entity may maintain (or store) a correspondence between a management object and information about a management object having an association relationship with the management object. Further, the intent management entity may obtain, based on the correspondence between the management object and the information about the management object having the association relationship with the management object and the first management object, the information about the second management object having the association relationship with the first management object.

In another example, the intent management entity may translate the first intent in the following manner: The intent management entity may translate the first intent based on the first management object, the status of the first management object, the action information corresponding to the first management object, and the information about the second management object. Alternatively, the intent management entity may translate the first intent based on the first management object, the status of the first management object, the target that needs to be achieved by the first management object, and the information about the second management object. Optionally, the intent management entity may alternatively translate the first intent based on the foregoing information and an intent translation model (or referred to as an intent translation template, or referred to as an intent translation rule).

The information about the second management object may indicate a status of the second management object, indicate information about a third management object having an association relationship with the second management object, or indicate the status of the second management object and the information about the third management object having the association relationship with the second management object. The information about the third management object may indicate a status of the third management object, indicate information about a fourth management object having an association relationship with the third management object, or indicate the status of the third management object and the information about the fourth management object having the association relationship with the third management object. The information about the fourth management object may be deduced by analogy. Details are not described herein. Optionally, the information about the second management object may include an identifier of the second management object.

The association relationship between the first management object and the second management object may be expressed as a first relationship, and the association relationship between the second management object and the third management object may be expressed as a second relationship. Details are not described herein. For example, the association relationship may include but is not limited to one or more of the following relationships.

Running relationship: The running relationship may indicate that one of two management objects is a running environment of the other management object. For example, a CIS is a running environment of an MCIO instance. The first management object may be the CIS, and the second management object is an MCIO, that is, the first management object is the running environment of the second management object; or the first management object may be the MCIO, and the second management object is the CIS, that is, the second management object is the running environment of the first management object.

Service relationship: The service relationship may indicate that one of two management objects provides a service for the other management object. For example, a VNF instance 1 provides a registration and discovery service for a VNF instance 2. The first management object may be the VNF instance 1, and the second management object is the VNF instance 2, that is, the first management object provides the service for the second management object; or the first management object may be the VNF instance 2, and the second management object is the VNF instance 1, that is, the second management object provides the service for the first management object.

Peer relationship: The peer relationship may indicate that two management objects run in a same cluster and work cooperatively (or work synchronously). For example, the first management object is a CIS instance, the second management object is a CIS instance, and the two CIS instances are located in a same container cluster. For another example, the first management object is a container cluster node, the second management object is a container cluster node, and the two container cluster nodes are located in a same container cluster.

Composition relationship: The composition relationship may indicate that one of two management objects consists of the other management object. For example, an NS instance may consist of a VNF instance, a PNF instance, and a VL instance. The first management object may be the NS instance, and the second management object is at least one of the VNF instance, the PNF instance, or the VL instance, that is, the first management object consists of the second management object; or the first management object may be at least one of the VNF instance, the PNF instance, or the VL instance, and the second management object is the VNF instance, that is, the second management object consists of the first management object.

Deployment relationship: The deployment relationship may indicate that two management objects are deployed on a same resource or different resources, or indicate that the two management objects are deployed in a same area or different areas. That the two management objects are deployed on a same resource may be referred to as that the two management objects have an affinity deployment relationship, and that the two management objects are deployed on different resources may be referred to as that the two management objects have an anti-affinity deployment relationship. For example, the first management object is a VNF instance, the second management object is a VNF instance, and the two VNF instances are deployed in affinity or anti-affinity mode.

Inheritance relationship: The inheritance relationship may indicate that one of two management objects inherits a function and/or an attribute of the other management object. For example, a VCP instance inherits, from a CP instance, an attribute of the CP instance. The first management object may be the VCP instance, and the second management object is the CP instance, that is, the first management object inherits, from the second management object, the attribute of the second management object; or the first management object may be the CP instance, and the second management object is the VCP instance, that is, the second management object inherits, from the first management object, the attribute of the first management object.

In S402, the intent management entity obtains the management operation information corresponding to the first intent, and the intent management entity may send the management operation information to a MANO entity, that is, perform content shown in S406. Alternatively, the intent management entity may perform a feasibility check on the management operation indicated by the management operation information, that is, perform content shown in S403 to S405.

S403: The intent management entity sends a management operation request message to the MANO entity. Correspondingly, the MANO entity receives the management operation request message from the intent management entity.

S403 is an optional step, and is represented by a dashed line in FIG. 4. It is assumed that the management operation information indicates a first management operation, and the management operation request message is used to request to determine whether the first management operation is allowed to be performed (or implemented). For example, the first management operation includes one or more of the following: instantiating an NS, creating a container cluster, reusing a created VNF instance, or the like. It should be understood that a name of the message used to request to determine whether the first management operation is allowed to be performed is not limited in this embodiment of this application.

In S403, the intent management entity may send the management operation request message to one or more MANO entities. For ease of understanding of this embodiment of this application, an example in which the intent management entity sends the management operation request message to one MANO entity is used in the following. For example, the first management operation is instantiating an NS, and the intent management entity may send, to an NFVO, the management operation request message used to request to determine whether the instantiating an NS is allowed to be performed. For another example, the first management operation is creating a container cluster, and the intent management entity may send, to a CCM, the management operation request message used to request to determine whether the creating a container cluster is allowed to be performed. For still another example, the first management operation is reusing a created VNF instance, and the intent management entity may send, to a VNFM, the management operation request message used to request to determine whether the reusing a created VNF instance is allowed to be performed. Optionally, the management operation request message may include an identifier of the created VNF instance.

S404: The MANO entity sends a management operation response message to the intent management entity. Correspondingly, the intent management entity receives the management operation response message from the MANO entity.

S404 is an optional step, and is represented by a dashed line in FIG. 4. After receiving the management operation request message, the MANO entity performs a feasibility check (not shown in FIG. 4) on the first management operation, and sends the management operation response message to the intent management entity, where the management operation response message carries a result of the feasibility check. The management operation response message indicates whether the MANO entity is allowed to perform the first management operation, or indicate whether the first management operation is allowed to be performed. In FIG. 4, an example in which the management operation response message indicates that the first management operation is allowed to be performed is used. For example, if the MANO entity performs a feasibility check on the first management operation, and a result of the feasibility check is that the first management operation is allowed to be performed, the management operation response message may indicate that the MANO entity is allowed to perform the first management operation, or indicate that the first management operation is allowed to be performed. For another example, if the MANO entity performs a feasibility check on the first management operation, and a result of the feasibility check is that the first management operation cannot be performed, the management operation response message may indicate that the MANO entity cannot perform the first management operation, or indicate that the first management operation cannot be performed. It should be understood that a specific implementation of the feasibility check is not limited in this embodiment of this application.

With the performing of S403 and S404, the intent management entity may determine whether one or more management operations indicated by the management operation information is allowed to be performed.

S405: The intent management entity sends an intent creation response message to the OSS/BSS. Correspondingly, the OSS/BSS receives the intent creation response message from the intent management entity.

S405 is an optional step, and is represented by a dashed line in FIG. 4. The intent creation response message may indicate that the first intent is successfully created or indicate that the first intent fails to be created. In FIG. 4, an example in which the intent creation response message indicates that the first intent is successfully created is used.

For example, the intent management entity determines, through S403 and S404, that one or more management operations indicated by the management operation information is allowed to be performed, and the intent creation response message may indicate that the first intent is successfully created. For another example, the intent management entity determines, through S403 and S404, that the management operation indicated by the management operation information cannot be performed, and the intent creation response message may indicate that the first intent fails to be created. Optionally, if the intent creation response message indicates that the first intent fails to be created, the OSS/BSS may modify (or update) the first intent, and send, to the intent management entity, an intent creation request message (not shown in FIG. 4) used to request to create a modified first intent. For example, the intent creation response message includes information about a reason why the first intent fails to be created, and the OSS/BSS may modify (or update) the first intent based on the information about the reason why the first intent fails to be created.

S406: The intent management entity sends the management operation information to the MANO entity. Correspondingly, the MANO entity receives the management operation information.

The intent management entity may send the management operation information to one or more MANO entities. For ease of understanding of this embodiment of this application, unless otherwise specified, an example in which the intent management entity sends the management operation information to one MANO entity is used. For example, the intent management entity may send the management operation information to the NFVO through an Im-Or interface.

An execution sequence of S405 and S406 is not limited in this embodiment of this application. For example, the intent management entity may first send the intent creation response message to the OSS/BSS, and then send the management operation information to the MANO entity. Alternatively, the intent management entity may first send the management operation information to the MANO entity, and then send the intent creation response message to the OSS/BSS. Alternatively, the intent management entity may send the intent creation response message to the OSS/BSS and send the management operation information to the MANO entity at the same time.

S407: The MANO entity performs the management operation indicated by the management operation information.

For example, the NFVO receives the management operation information from the intent management entity through the Im-Or interface, and interacts, based on the management operation information, with a MANO entity other than the NFVO in the NFV MANO management domain, to perform the management operation indicated by the management operation information. For example, the NFVO may send, to the VNFM, a message used to request to create a VNF or request to configure a VNF. For another example, the NFVO may send, to the VIM, a message used to request to create a virtual machine resource or request to configure a virtual machine resource. It should be understood that a specific implementation process in which the MANO entity performs the management operation is not limited in this embodiment of this application.

S408: The intent management entity sends a third notification message to the OSS/BSS. The OSS/BSS receives the third notification message from the intent management entity.

S408 is an optional step, and is represented by a dashed line in FIG. 4. The third notification message may indicate that the first intent is implemented, or indicate that the first intent is met. In FIG. 4, an example in which the third notification message indicates that the first intent is implemented is used.

For example, the intent management entity may determine whether the first intent is implemented (not shown in FIG. 4). For example, the MANO entity may send, to the intent management entity, a message indicating whether the management operation indicated by the management operation information is completed. If the message indicates that the management operation indicated by the management operation information is completed, the intent management entity may determine, based on the message, that the first intent is implemented, and send, to the OSS/BSS, the third notification message indicating that the first intent is implemented. If the message indicates that the management operation indicated by the management operation information is not completed, the intent management entity may determine, based on the message, that the first intent is not implemented, and send, to the OSS/BSS, the third notification message indicating that the first intent is not implemented. It may be understood that an implementation process in which the intent management entity determines whether the first intent is implemented is not limited in this embodiment of this application.

By now, the first intent is implemented.

In the foregoing embodiment of this application, the intent management entity may translate the first intent for the first management object based on the status of the first management object, to obtain the management operation information corresponding to the first intent. In comparison with a manner of directly translating the first intent, an implementation process of intent translation can be detailed, so that the intent translation can adapt to a status of a management object corresponding to the intent in the NFV MANO management domain.

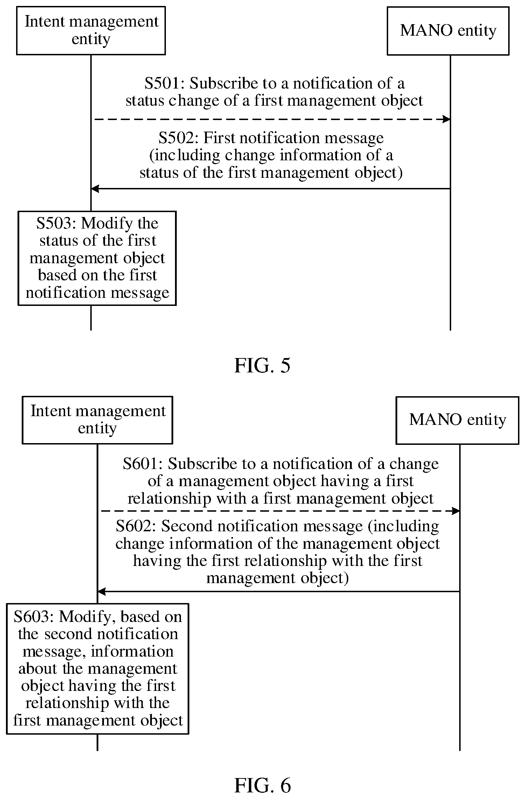

As mentioned above, the intent management entity may maintain (or store) the correspondence between the management object and the status of the management object. In a possible implementation, the intent management entity may update (or modify) the correspondence that is maintained (or stored) by the intent management entity and that is between the management object and the status of the management object, as shown in FIG. 5.

FIG. 5 is a schematic flowchart of another intent management method according to an embodiment of this application. As shown in FIG. 5, the method may include the following steps.

S501: An intent management entity subscribes to a notification of a status change of a first management object from a MANO entity.

S501 is an optional step, and is represented by a dashed line in FIG. 5. The intent management entity may subscribe to a notification of a status change of a management object from one or more MANO entities. For example, the intent management entity may subscribe to a notification of a status change of a management object from all MANO entities in an NFV MANO management domain. The status change of the management object may include but is not limited to one or more of the following: creation of the management object, deletion of the management object, a change of a status of the management object, or the like.

For ease of understanding, in this embodiment of this application, an example in which the intent management entity subscribes to the notification of the status change of the first management object from the MANO entity is used.

S502: The MANO entity sends a first notification message to the intent management entity. Correspondingly, the intent management entity receives the first notification message.

The first notification message may also be referred to as a first change notification message, a status change notification message, or the like. This is not limited in this embodiment of this application. The first notification message may include change information of a status of the first management object. For example, the change information of the status of the first management object may indicate creation of the first management object, deletion of the first management object, or a change of the status of the first management object.

For example, the MANO entity may monitor the status of the first management object. When the status of the first management object changes, the MANO entity may send the first notification message to the intent management entity. For example, the MANO entity may send the first notification message to the intent management entity in response to subscription of the intent management entity. Alternatively, the MANO entity may actively send the first notification message to the intent management entity. An implementation is flexible.

S503: The intent management entity modifies the status of the first management object based on the first notification message.

After receiving the first notification message, the intent management entity may modify (or update) the status of the first management object based on the first notification message. For example, the intent management entity may modify (or update) the status of the first management object based on the change information of the status of the first management object.

In the foregoing embodiment, the intent management entity may update or modify a status of a management object that is maintained by the intent management entity, so that the status of the management object that is locally maintained by the intent management entity can be consistent with a status of the management object in the NFV MANO management domain. This can reduce a problem that an error exists in an intent translation result because a status of a management object that is locally maintained by the intent management entity is inconsistent with a status of the management object in the NFV MANO management domain, improving accuracy of intent translation.

As mentioned above, the intent management entity may maintain (or store) the correspondence between the management object and the information about the management object having the first relationship with the management object. In a possible implementation, the intent management entity may update (or modify) the correspondence that is maintained (or stored) by the intent management entity and that is between the management object and the information about the management object having the first relationship with the intent management entity, as shown in FIG. 6.

FIG. 6 is a schematic flowchart of still another intent management method according to an embodiment of this application. As shown in FIG. 6, the method may include the following steps.

S601: An intent management entity subscribes, from a MANO entity, to a notification of a change of a management object having a first relationship with a first management object.

S601 is an optional step, and is represented by a dashed line in FIG. 6. The intent management entity may subscribe, from one or more MANO entities, to a notification of a change of two management objects having the first relationship with each other. For example, the intent management entity may subscribe, from all MANO entities in an NFV MANO management domain, to a notification of a change of two management objects having the first relationship with each other. The first management object is used as an example. The change of the two management objects having the first relationship with each other may be understood as: A second management object having the first relationship with the first management object changes, for example, the second management object changes from a management object A to a management object B.

For ease of understanding, in this embodiment of this application, an example in which the intent management entity subscribes, from the MANO entity, to the notification of the change of the management object having the first relationship with the first management object is used.

S602: The MANO entity sends a second notification message to the intent management entity. Correspondingly, the intent management entity receives the second notification message from the MANO entity.

The second notification message may also be referred to as a second change notification message, an association relationship change notification message, a dependency relationship change notification message, or the like. This is not limited in this embodiment of this application. The second notification message may include change information of the management object (for example, denoted as the second management object) having the first relationship with the first management object. For example, the change information of the management object having the first relationship with the first management object may indicate creation of the second management object, deletion of the second management object, or a change of a status of the second management object.

For example, the MANO entity may monitor the management object having the first relationship with the first management object, and when the management object having the first relationship with the first management object changes, the MANO entity may send the second notification message to the intent management entity. For example, the MANO entity may send the second notification message to the intent management entity in response to subscription of the intent management entity. Alternatively, the MANO entity may actively send the second notification message to the intent management entity. An implementation is flexible.

For example, the MANO entity may be configured with an intelligent data analytics function, for example, management data analytics (management data analytics, MDA), and dynamically identify, by using artificial intelligence or a machine learning model in the data analytics function, two management objects having the first relationship with each other. Further, the MANO entity may monitor the management object having the first relationship with the first management object.

S603: The intent management entity modifies, based on the second notification message, information about the management object having the first relationship with the first management object.

After receiving the second notification message, the intent management entity may modify (or update), based on the second notification message, the information about the management object having the first relationship with the first management object. For example, the intent management entity may modify (or update), based on the change information of the management object having the first relationship with the first management object, the information about the management object having the first relationship with the first management object.

In the foregoing embodiment, the intent management entity may update or modify information about two management objects having the first relationship with each other, so that the information about the two management objects having the first relationship with each other that is locally maintained by the intent management entity can be consistent with information about the two management objects having the first relationship with each other in the NFV MANO management domain. This can reduce a problem that an error exists in an intent translation result because information about two management objects having the first relationship with each other that is locally maintained by the intent management entity is inconsistent with information about the two management objects having the first relationship with each other in the NFV MANO management domain, improving accuracy of intent translation.

The embodiment shown in FIG. 5 and the embodiment shown in FIG. 6 may be two independent embodiments, or may be combined into one embodiment. That is, the intent management entity may subscribe to the notification of the status change of the first management object from the MANO entity, or may subscribe, from the MANO entity, to the notification of the change of the management object having the first relationship with the first management object. An execution sequence thereof is not limited. Further, the MANO entity may send two notification messages (for example, the first notification message in S502 and the second notification message in S602, and an execution sequence of the two steps is not limited) to the intent management entity, or may send one notification message to the intent management entity, where the notification message includes the change information of the status of the first management object and the change information of the management object having the first relationship with the first management object.

For example, the first management object is an NS instance 1, the NS instance 1 is being loaded, and the NS instance 1 consists of a VNF instance 1. In other words, a status of the NS instance 1 is being loaded, and a management object having the first relationship with the NS instance 1 is the VNF instance 1. The intent management entity may subscribe, from the MANO entity, to a notification of a status change of the NS instance 1 and a notification of a change of a management object having the first relationship with the NS instance 1. Assuming that the MANO entity detects that the status of the NS instance 1 changes from being loaded to loaded, and the NS instance 1 changes from consisting of the VNF instance 1 to consisting of a VNF instance 2, the MANO entity may notify the intent management entity that the status of the NS instance 1 changes and the management object having the first relationship with the NS instance 1 changes. In response to the notification from the MANO entity, the intent management entity modifies the status of the NS instance 1 and modifies information about the management object having the first relationship with the NS instance 1, that is, the intent management entity modifies the status of the NS instance 1 to loaded, and modifies the management object having the first relationship with the NS instance 1 to the VNF instance 2.

In the foregoing embodiments provided in this application, solutions of the intent management methods provided in embodiments of this application are separately described from the perspective of functional modules or devices and interaction between the functional modules or devices. It may be understood that, to implement the foregoing functions, each functional module or device, for example, the foregoing intent management entity, includes a corresponding hardware structure and/or software module for performing each function. A person skilled in the art should easily be aware that, with reference to units and algorithm steps of the examples described in embodiments disclosed in this application, this application can be implemented by hardware or a combination of hardware and computer software. Whether a function is performed by hardware or hardware driven by computer software depends on particular applications and design constraint conditions of the technical solutions. A person skilled in the art may use different methods to implement the described functions for each particular application, but it should not be considered that the implementation goes beyond the scope of this application.

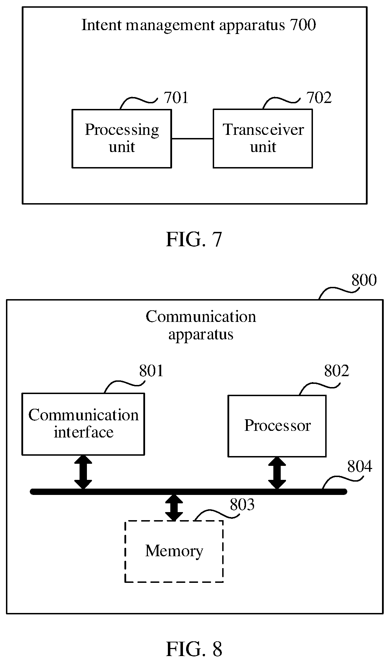

For example, when the foregoing functional modules or devices implement corresponding functions by using software modules, an intent management apparatus provided in an embodiment of this application may be shown in FIG. 7. Refer to FIG. 7. The intent management apparatus 700 may include a processing unit 701 and a transceiver unit 702. The processing unit 701 is configured to: control and manage an action of the intent management apparatus 700. The transceiver unit 702 is configured to receive information (a message or data) and/or send information (a message or data). The processing unit 701 may be further configured to control a step performed by the transceiver unit 702.

Optionally, the intent management apparatus 700 may be the intent management entity, or a processor, a chip, a chip system, a functional module, or the like in the intent management entity in the foregoing embodiments.

For example, the transceiver unit 702 is configured to receive an intent creation request message from an OSS/BSS, where the intent creation request message is used to request to create a first intent for a first management object. The processing unit 701 is configured to translate the first intent based on first information, to obtain management operation information corresponding to the first intent, where the first information indicates a status of the first management object. The transceiver unit 702 is further configured to send the management operation information to a management and orchestration MANO entity.

In a possible implementation, for example, the first management object may be an NS, an NFV template, a VNF, a virtualised network function component, a container infrastructure object, a virtual machine, a bare metal, a container infrastructure service, a physical network function, a virtual link, a connection point, or a virtual connection point. This is not limited in this embodiment of this application.

In a possible implementation, the management operation information indicates a first management operation. Before sending the management operation information to the MANO entity, the transceiver unit 702 is further configured to: send a management operation request message to the MANO entity, where the management operation request message is used to request to determine whether the first management operation is allowed to be performed; and receive a management operation response message from the MANO entity, where the management operation response message indicates that the MANO entity is allowed to perform the first management operation.

In a possible implementation, the first management operation may include but is not limited to one or more of the following: instantiating a network service, creating a container cluster, or reusing a created virtualised network function instance.

In a possible implementation, the transceiver unit 702 is further configured to receive a first notification message from the MANO entity, where the first notification message includes change information of the status of the first management object. The processing unit 701 is further configured to modify the status of the first management object based on the first notification message. For example, the processing unit 701 is configured to locally modify the status of the first management object based on the change information of the status of the first management object.

In a possible implementation, the transceiver unit 702 is further configured to subscribe to a notification of a status change of the first management object from the MANO entity.

In a possible implementation, the first information may further indicate information about a second management object having a first relationship with the first management object.

In a possible implementation, the information about the second management object indicates a status of the second management object, indicates information about a third management object having a second relationship with the second management object, or indicates the status of the second management object and the information about the third management object having the second relationship with the second management object.

In a possible implementation, the transceiver unit 702 is further configured to receive a second notification message from the MANO entity, where the second notification message includes change information of a management object having the first relationship with the first management object. The processing unit 701 is further configured to modify, based on the second notification message, information about the management object having the first relationship with the first management object. For example, the processing unit 701 is configured to locally modify, based on the change information of the management object having the first relationship with the first management object, the information about the management object having the first relationship with the first management object.

In a possible implementation, the transceiver unit 702 is further configured to subscribe, from the MANO entity, to a notification of a change of the management object having the first relationship with the first management object.

In a possible implementation, the first relationship in this embodiment of this application may include but is not limited to one or more of the following relationships:
a running relationship, where the running relationship indicates that one of two management objects is a running environment of the other management object;
a service relationship, where the service relationship indicates that one of two management objects provides a service for the other management object;
a peer relationship, where the peer relationship indicates that two management objects run in a same cluster and work cooperatively;
a composition relationship, where the composition relationship indicates that one of two management objects consists of the other management object;
a deployment relationship, where the deployment relationship indicates that two management objects are deployed on a same resource or different resources, or indicates that the two management objects are deployed in a same area or different areas; or
an inheritance relationship, where the inheritance relationship indicates that one of two management objects inherits a function and/or an attribute of the other management object.

In a possible implementation, the status of the first management object in this embodiment of this application may include but is not limited to one or more of the following statuses:
a running status, where the running status indicates that the first management object has been instantiated or has not been instantiated;
a usage status, where the usage status indicates that a first resource corresponding to the first management object is completely occupied, partially occupied, or not occupied, and the first resource includes a computing resource and/or a storage resource; or
a loading status, where the loading status indicates that the first management object has been created, is being loaded, is being processed, or has been loaded.

In a possible implementation, the transceiver unit 702 is further configured to send an intent creation response message to the OSS/BSS, where the intent creation response message indicates that the first intent is successfully created.

In a possible implementation, the first intent in this embodiment of this application may be a network service intent. However, this embodiment of this application is not limited thereto.

It may be understood that, in this embodiment of this application, unit division is an example, and is merely a logical function division. In an actual implementation, another division manner may be used. Functional units in this embodiment of this application may be integrated into one processing unit, or each of the units may exist alone physically, or two or more units may be integrated into one unit. The integrated unit may be implemented in a form of hardware, or may be implemented in a form of a software functional unit.

When the integrated unit is implemented in the form of the software functional unit and sold or used as an independent product, the integrated unit may be stored in a computer-readable storage medium. Based on such an understanding, the technical solutions of this application essentially, or the part contributing to the conventional technology, or all or some of the technical solutions may be implemented in a form of a software product. The computer software product is stored in a storage medium and includes several instructions for instructing a computer device (which may be a personal computer, a server, a network device, or the like) or a processor (processor) to perform all or some of the steps of the methods in embodiments of this application. The foregoing storage medium includes various media that can store program code, such as a USB flash drive, a removable hard disk, a read-only memory (read-only memory, ROM), a random access memory (random access memory, RAM), a magnetic disk, or an optical disc.

For example, when the foregoing functional modules or devices implement corresponding functions by hardware, a communication apparatus provided in an embodiment of this application may be shown in FIG. 8. Refer to FIG. 8. The communication apparatus 800 may include a communication interface 801 and a processor 802. Optionally, the communication apparatus 800 may further include a memory 803, which is represented by a dashed line in FIG. 8.

Specifically, the processor 802 may be a central processing unit (central processing unit, CPU), a network processor (network processor, NP), or a combination of a CPU and an NP. The processor 802 may further include a hardware chip. The hardware chip may be an application-specific integrated circuit (application-specific integrated circuit, ASIC), a programmable logic device (programmable logic device, PLD), or a combination thereof. The PLD may be a complex programmable logic device (complex programmable logic device, CPLD), a field-programmable logic gate array (field-programmable gate array, FPGA), a generic array logic (generic array logic, GAL), or any combination thereof.

The communication interface 801, the processor 802, and the memory 803 are connected to each other. Optionally, the communication interface 801, the processor 802, and the memory 803 are connected to each other through a bus 804. The bus 804 may be a peripheral component interconnect (Peripheral Component Interconnect, PCI) bus, an extended industry standard architecture (Extended Industry Standard Architecture, EISA) bus, or the like. The bus may be classified into an address bus, a data bus, a control bus, and the like. For ease of representation, only one bold line is used for representation in FIG. 8, but this does not mean that there is only one bus or only one type of bus.

In an optional implementation, the memory 803 is configured to store a program and the like. Specifically, the program may include program code, and the program code includes computer operation instructions. The memory 803 may include a RAM, or may further include a non-volatile memory (non-volatile memory), for example, one or more magnetic disk memories. The processor 802 executes the application program stored in the memory 803, to implement the foregoing functions, to implement the functions of the communication apparatus 800.

Optionally, the communication apparatus 800 may be the intent management entity in the foregoing embodiments.

In an embodiment, when the communication apparatus 800 implements functions of the intent management entity in the foregoing embodiments, the communication interface 801 may implement receiving and sending operations performed by the intent management entity in the foregoing embodiments. The processor 802 may implement operations other than the receiving and sending operations performed by the intent management entity in the foregoing embodiments. For detailed related descriptions, refer to related descriptions in the foregoing embodiments. Details are not described herein again.

Based on a same technical concept, an embodiment of this application further provides a computer-readable storage medium. The computer-readable storage medium is configured to store a computer program. When the computer program is executed by a computer, the computer may implement the intent management method provided in the foregoing method embodiments.

Based on a same technical concept, an embodiment of this application further provides a computer program product. The computer program product is configured to store a computer program. When the computer program is executed by a computer, the computer may implement the intent management method provided in the foregoing method embodiments.

Based on a same technical concept, an embodiment of this application further provides a chip, including a processor. The processor is coupled to a memory, and is configured to invoke a program in the memory, so that the chip implements the intent management method provided in the foregoing method embodiments.

Based on a same technical concept, an embodiment of this application further provides an intent management system. The intent management system includes the intent management entity in the foregoing embodiments and the OSS/BSS in the foregoing embodiments. Optionally, the intent management system may further include the MANO entity in the foregoing embodiments.

A person skilled in the art should understand that embodiments of this application may be provided as a method, a system, or a computer program product. Therefore, this application may use a form of hardware only embodiments, software only embodiments, or embodiments with a combination of software and hardware. In addition, this application may use a form of a computer program product that is implemented on one or more computer-usable storage media (including but not limited to a disk memory, a CD-ROM, an optical memory, and the like) that include computer-usable program code.

This application is described with reference to the flowcharts and/or block diagrams of the method, the device (system), and the computer program product according to this application. It should be understood that computer program instructions may be used to implement each procedure and/or each block in the flowcharts and/or the block diagrams and a combination of a procedure and/or a block in the flowcharts and/or the block diagrams. These computer program instructions may be provided for a general-purpose computer, a dedicated computer, an embedded processor, or a processor of any other programmable data processing device to generate a machine, so that the instructions executed by a computer or a processor of any other programmable data processing device generate an apparatus for implementing a specific function in one or more procedures in the flowcharts and/or in one or more blocks in the block diagrams.

These computer program instructions may be stored in a computer-readable memory that can indicate the computer or any other programmable data processing device to work in a specific manner, so that the instructions stored in the computer-readable memory generate an artifact that includes an instruction apparatus. The instruction apparatus implements a specific function in one or more procedures in the flowcharts and/or in one or more blocks in the block diagrams.

The computer program instructions may alternatively be loaded onto a computer or another programmable data processing device, so that a series of operations and steps are performed on the computer or the another programmable device, so that computer-implemented processing is generated. Therefore, the instructions executed on the computer or the another programmable device provide steps for implementing a specific function in one or more procedures in the flowcharts and/or in one or more blocks in the block diagrams.

It is clear that a person skilled in the art can make various modifications and variations to this application without departing from the scope of this application. This application is intended to cover these modifications and variations of this application provided that they fall within the scope of protection defined by the following claims and their equivalent technologies.

## Claims

1. An intent management method, applied to an intent management entity, wherein the method comprises:
receiving an intent creation request message from an operation support system/business support system OSS/BSS, wherein the intent creation request message is used to request to create a first intent for a first management object;
translating the first intent based on first information, to obtain management operation information corresponding to the first intent, wherein the first information indicates a status of the first management object; and
sending the management operation information to a management and orchestration MANO entity.

2. The method according to claim 1, wherein the management operation information indicates a first management operation; and
before sending the management operation information to the MANO entity, the method further comprises:
sending a management operation request message to the MANO entity, wherein the management operation request message is used to request to determine whether the first management operation is allowed to be performed; and
receiving a management operation response message from the MANO entity, wherein the management operation response message indicates that the MANO entity is allowed to perform the first management operation.

3. The method according to claim 2, wherein the first management operation comprises one or more of the following: instantiating a network service, creating a container cluster, or reusing a created virtualised network function instance.

4. The method according to any one of claims 1 to 3, wherein the method further comprises:
receiving a first notification message from the MANO entity, wherein the first notification message comprises change information of the status of the first management object; and
modifying the status of the first management object based on the first notification message.

5. The method according to claim 4, wherein the method further comprises:
subscribing to a notification of a status change of the first management object from the MANO entity.

6. The method according to any one of claims 1 to 5, wherein the first information further indicates information about a second management object having a first relationship with the first management object.

7. The method according to claim 6, wherein the information about the second management object indicates a status of the second management object and/or indicates information about a third management object having a second relationship with the second management object.

8. The method according to claim 6 or 7, wherein the method further comprises:
receiving a second notification message from the MANO entity, wherein the second notification message comprises change information of a management object having the first relationship with the first management object; and
modifying, based on the second notification message, information about the management object having the first relationship with the first management object.

9. The method according to claim 8, wherein the method further comprises:
subscribing, from the MANO entity, to a notification of a change of the management object having the first relationship with the first management object.

10. The method according to any one of claims 6 to 9, wherein the first relationship comprises one or more of the following relationships:
a running relationship, wherein the running relationship indicates that one of two management objects is a running environment of the other management object;
a service relationship, wherein the service relationship indicates that one of two management objects provides a service for the other management object;
a peer relationship, wherein the peer relationship indicates that two management objects run in a same cluster and work cooperatively;
a composition relationship, wherein the composition relationship indicates that one of two management objects consists of the other management object;
a deployment relationship, wherein the deployment relationship indicates that two management objects are deployed on a same resource or different resources; or
an inheritance relationship, wherein the inheritance relationship indicates that one of two management objects inherits a function and/or an attribute of the other management object.

11. The method according to any one of claims 1 to 10, wherein the status of the first management object comprises one or more of the following statuses:
a running status, wherein the running status indicates that the first management object has been instantiated or has not been instantiated;
a usage status, wherein the usage status indicates that a first resource corresponding to the first management object is completely occupied, partially occupied, or not occupied, and the first resource comprises a computing resource and/or a storage resource; or
a loading status, wherein the loading status indicates that the first management object has been created, is being loaded, is being processed, or has been loaded.

12. The method according to any one of claims 1 to 11, wherein the method further comprises:
sending an intent creation response message to the OSS/BSS, wherein the intent creation response message indicates that the first intent is successfully created.

13. The method according to any one of claims 1 to 12, wherein the first intent is a network service intent.

14. An intent management method, applied to an intent management system, wherein the intent management system comprises an intent management entity and an operation support system/business support system OSS/BSS, and the method comprises:
sending, by the OSS/BSS, an intent creation request message to the intent management entity, wherein the intent creation request message is used to request to create a first intent for a first management object; and
receiving, by the intent management entity, an intent management creation request message from the OSS/BSS, translating the first intent based on first information, to obtain management operation information corresponding to the first intent, and sending the management operation information to a management and orchestration MANO entity, wherein the first information indicates a status of the first management object.

15. The method according to claim 14, wherein the intent management system further comprises the MANO entity, and the method further comprises:
receiving, by the MANO entity, the management operation information from the intent management entity, and performing a management operation indicated by the management operation information.

16. The method according to claim 15, wherein the management operation information indicates a first management operation; and
before the sending the management operation information to a MANO entity, the method further comprises:
sending, by the intent management entity, a management operation request message to the MANO entity, wherein the management operation request message is used to request to determine whether the first management operation is allowed to be performed; and receiving a management operation response message from the MANO entity, wherein the management operation response message indicates that the MANO entity is allowed to perform the first management operation.

17. The method according to claim 16, wherein the first management operation comprises one or more of the following: instantiating a network service, creating a container cluster, or reusing a created virtualised network function instance.

18. The method according to any one of claims 14 to 17, wherein the intent management system further comprises the MANO entity, and the method further comprises:
sending, by the MANO entity, a first notification message to the intent management entity, wherein the first notification message comprises change information of the status of the first management object; and
receiving, by the intent management entity, the first notification message from the MANO entity, and modifying the status of the first management object based on the first notification message.

19. The method according to claim 18, wherein the method further comprises:
subscribing, by the intent management entity, to a notification of a status change of the first management object from the MANO entity; and
receiving, by the MANO entity from the intent management entity, information that is used to subscribe to the notification of the status change of the first management object.

20. The method according to any one of claims 14 to 19, wherein the first information further indicates information about a second management object having a first relationship with the first management object.

21. The method according to claim 20, wherein the information about the second management object indicates a status of the second management object and/or indicates information about a third management object having a second relationship with the second management object.

22. The method according to claim 20 or 21, wherein the intent management system further comprises the MANO entity, and the method further comprises:
sending, by the MANO entity, a second notification message to the intent management entity, wherein the second notification message comprises change information of a management object having the first relationship with the first management object; and
receiving, by the intent management entity, the second notification message from the MANO entity, and modifying, based on the second notification message, information about the management object having the first relationship with the first management object.

23. The method according to claim 22, wherein the method further comprises:
subscribing, by the intent management entity from the MANO entity, to a notification of a change of the management object having the first relationship with the first management object; and
receiving, by the MANO entity from the intent management entity, information that is used to subscribe to the notification of the change of the management object having the first relationship with the first management object.

24. The method according to any one of claims 20 to 23, wherein the first relationship comprises one or more of the following relationships:
a running relationship, wherein the running relationship indicates that one of two management objects is a running environment of the other management object;
a service relationship, wherein the service relationship indicates that one of two management objects provides a service for the other management object;
a peer relationship, wherein the peer relationship indicates that two management objects run in a same cluster and work cooperatively;
a composition relationship, wherein the composition relationship indicates that one of two management objects consists of the other management object;
a deployment relationship, wherein the deployment relationship indicates that two management objects are deployed on a same resource or different resources; or
an inheritance relationship, wherein the inheritance relationship indicates that one of two management objects inherits a function and/or an attribute of the other management object.

25. The method according to any one of claims 14 to 24, wherein the status of the first management object comprises one or more of the following statuses:
a running status, wherein the running status indicates that the first management object has been instantiated or has not been instantiated;
a usage status, wherein the usage status indicates that a first resource corresponding to the first management object is completely occupied, partially occupied, or not occupied, and the first resource comprises a computing resource and/or a storage resource; or
a loading status, wherein the loading status indicates that the first management object has been created, is being loaded, is being processed, or has been loaded.

26. The method according to any one of claims 14 to 25, wherein the method further comprises:
sending, by the intent management entity, an intent creation response message to the OSS/BSS, wherein the intent creation response message indicates that the first intent is successfully created; and
receiving, by the OSS/BSS, the intent creation response message from the intent management entity.

27. The method according to any one of claims 14 to 26, wherein the first intent is a network service intent.

28. An intent management apparatus, wherein the apparatus comprises a transceiver unit and a processing unit, wherein
the transceiver unit is configured to receive an intent creation request message from an operation support system/business support system OSS/BSS, wherein the intent creation request message is used to request to create a first intent for a first management object;
the processing unit is configured to translate the first intent based on first information, to obtain management operation information corresponding to the first intent, wherein the first information indicates a status of the first management object; and
the transceiver unit is further configured to send the management operation information to a management and orchestration MANO entity.

29. The apparatus according to claim 28, wherein the management operation information indicates a first management operation; and
before sending the management operation information to the MANO entity, the transceiver unit is further configured to: send a management operation request message to the MANO entity, wherein the management operation request message is used to request to determine whether the first management operation is allowed to be performed; and receive a management operation response message from the MANO entity, wherein the management operation response message indicates that the MANO entity is allowed to perform the first management operation.

30. The apparatus according to claim 29, wherein the first management operation comprises one or more of the following: instantiating a network service, creating a container cluster, or reusing a created virtualised network function instance.

31. The apparatus according to any one of claims 28 to 30, wherein
the transceiver unit is further configured to receive a first notification message from the MANO entity, wherein the first notification message comprises change information of the status of the first management object; and
the processing unit is further configured to modify the status of the first management object based on the first notification message.

32. The apparatus according to claim 31, wherein
the transceiver unit is further configured to subscribe to a notification of a status change of the first management object from the MANO entity.

33. The apparatus according to any one of claims 28 to 32, wherein the first information further indicates information about a second management object having a first relationship with the first management object.

34. The apparatus according to claim 33, wherein the information about the second management object indicates a status of the second management object and/or indicates information about a third management object having the second relationship with the second management object.

35. The apparatus according to claim 33 or 34, wherein
the transceiver unit is further configured to receive a second notification message from the MANO entity, wherein the second notification message comprises change information of a management object having the first relationship with the first management object; and
the processing unit is further configured to modify, based on the second notification message, information about the management object having the first relationship with the first management object.

36. The apparatus according to claim 35, wherein
the transceiver unit is further configured to subscribe, from the MANO entity, to a notification of a change of the management object having the first relationship with the first management object.

37. The apparatus according to any one of claims 33 to 36, wherein the first relationship comprises one or more of the following relationships:
a running relationship, wherein the running relationship indicates that one of two management objects is a running environment of the other management object;
a service relationship, wherein the service relationship indicates that one of two management objects provides a service for the other management object;
a peer relationship, wherein the peer relationship indicates that two management objects run in a same cluster and work cooperatively;
a composition relationship, wherein the composition relationship indicates that one of two management objects consists of the other management object;
a deployment relationship, wherein the deployment relationship indicates that two management objects are deployed on a same resource or different resources; or
an inheritance relationship, wherein the inheritance relationship indicates that one of two management objects inherits a function and/or an attribute of the other management object.

38. The apparatus according to any one of claims 28 to 37, wherein the status of the first management object comprises one or more of the following statuses:
a running status, wherein the running status indicates that the first management object has been instantiated or has not been instantiated;
a usage status, wherein the usage status indicates that a first resource corresponding to the first management object is completely occupied, partially occupied, or not occupied, and the first resource comprises a computing resource and/or a storage resource; or
a loading status, wherein the loading status indicates that the first management object has been created, is being loaded, is being processed, or has been loaded.

39. The apparatus according to any one of claims 28 to 37, wherein the transceiver unit is further configured to:
send an intent creation response message to the OSS/BSS, wherein the intent creation response message indicates that the first intent is successfully created.

40. The apparatus according to any one of claims 28 to 39, wherein the first intent is a network service intent.

41. A computer-readable storage medium, wherein the computer-readable storage medium stores computer-executable instructions, and when the computer-executable instructions are invoked by the computer, the method according to any one of claims 1 to 13 or the method according to any one of claims 14 to 27 is performed.

42. A chip, wherein the chip is coupled to a memory, and is configured to read and execute program instructions stored in the memory, to implement the method according to any one of claims 1 to 13, or implement the method according to any one of claims 14 to 27.

43. A computer program product, comprising instructions, wherein when the instructions are run on a computer, the computer is enabled to perform the method according to any one of claims 1 to 13 or the method according to any one of claims 14 to 27.

44. An intent management system, comprising an intent management entity and an operation support system/business support system OSS/BSS, wherein
the OSS/BSS is configured to send an intent creation request message to the intent management entity, wherein the intent creation request message is used to request to create a first intent for a first management object; and
the intent management entity is configured to: receive an intent management creation request message from the OSS/BSS, translate the first intent based on first information, to obtain management operation information corresponding to the first intent, and send the management operation information to a management and orchestration MANO entity, wherein the first information indicates a status of the first management object.

45. The system according to claim 44, wherein the intent management system further comprises the MANO entity, and the MANO entity is configured to: receive the management operation information from the intent management entity, and perform a management operation indicated by the management operation information.

46. The system according to claim 45, wherein the management operation information indicates a first management operation; and
before sending the management operation information to the MANO entity, the system further comprises:
the intent management entity is further configured to: send a management operation request message to the MANO entity, wherein the management operation request message is used to request to determine whether the first management operation is allowed to be performed; and receive a management operation response message from the MANO entity, wherein the management operation response message indicates that the MANO entity is allowed to perform the first management operation.

47. The system according to claim 46, wherein the first management operation comprises one or more of the following: instantiating a network service, creating a container cluster, or reusing a created virtualised network function instance.

48. The system according to any one of claims 44 to 47, wherein the intent management system further comprises the MANO entity; the MANO entity is configured to send a first notification message to the intent management entity, wherein the first notification message comprises change information of the status of the first management object; and
the intent management entity is further configured to: receive the first notification message from the MANO entity, and modify the status of the first management object based on the first notification message.

49. The system according to claim 48, wherein the intent management entity is further configured to subscribe to a notification of a status change of the first management object from the MANO entity; and
the MANO entity is configured to receive from the intent management entity information that is used to subscribe to the notification of the status change of the first management object.

50. The system according to any one of claims 44 to 49, wherein the first information further indicates information about a second management object having a first relationship with the first management object.

51. The system according to claim 50, wherein the information about the second management object indicates a status of the second management object and/or indicates information about a third management object having a second relationship with the second management object.

52. The system according to claim 48 or 49, wherein the intent management system further comprises the MANO entity; the MANO entity is configured to send a second notification message to the intent management entity, wherein the second notification message comprises change information of a management object having the first relationship with the first management object; and
the intent management entity is further configured to: receive the second notification message from the MANO entity, and modify, based on the second notification message, information about the management object having the first relationship with the first management object.

53. The system according to claim 52, wherein the intent management entity is further configured to subscribe, from the MANO entity, to a notification of a change of the management object having the first relationship with the first management object; and
the MANO entity is further configured to receive, from the intent management entity, information that is used to subscribe to the notification of the change of the management object having the first relationship with the first management object.

54. The system according to any one of claims 50 to 53, wherein the first relationship comprises one or more of the following relationships:
a running relationship, wherein the running relationship indicates that one of two management objects is a running environment of the other management object;
a service relationship, wherein the service relationship indicates that one of two management objects provides a service for the other management object;
a peer relationship, wherein the peer relationship indicates that two management objects run in a same cluster and work cooperatively;
a composition relationship, wherein the composition relationship indicates that one of two management objects consists of the other management object;
a deployment relationship, wherein the deployment relationship indicates that two management objects are deployed on a same resource or different resources; or
an inheritance relationship, wherein the inheritance relationship indicates that one of two management objects inherits a function and/or an attribute of the other management object.

55. The system according to any one of claims 44 to 54, wherein the status of the first management object comprises one or more of the following statuses:
a running status, wherein the running status indicates that the first management object has been instantiated or has not been instantiated;
a usage status, wherein the usage status indicates that a first resource corresponding to the first management object is completely occupied, partially occupied, or not occupied, and the first resource comprises a computing resource and/or a storage resource; or
a loading status, wherein the loading status indicates that the first management object has been created, is being loaded, is being processed, or has been loaded.

56. The system according to any one of claims 44 to 55, wherein the intent management entity is further configured to send an intent creation response message to the OSS/BSS, wherein the intent creation response message indicates that the first intent is successfully created; and
the OSS/BSS is further configured to receive the intent creation response message from the intent management entity.

57. The system according to any one of claims 44 to 56, wherein the first intent is a network service intent.
